# FASCICULE DE BREVET EUROPEEN

(11) **EP 4 369 558 B1**
(45) Date de publication et mention de la délivrance du brevet: **12.08.2026**
(21) Numéro de dépôt: 23208017.6
(22) Date de dépôt: 06.11.2023
(51) Int. Cl.: H02J 7/00, H01M 10/44, H01M 10/48, H01M 50/51, H02J 7/02, H02J 7/36, H02J 7/94, H02J 7/54

(54) **BATTERIE RECHARGEABLE**
WIEDERAUFLADBARE BATTERIE
RECHARGEABLE BATTERY

(30) Priorité: 09.11.2022 FR 2211671
(43) Date de publication de la demande: 15.05.2024
(73) Titulaire: MOV'NTEC, 62620 Ruitz (FR)
(72) Inventeur: YVERGNIAUX, Ronan, 59800 LILLE (FR); SANTAMARIA, Adam, 75015 PARIS (FR)
(74) Mandataire: Plasseraud IP

(56) Documents cités:
- WO-A1-2013/015162
- US-A1- 2020 244 076
- US-A1- 2020 321 789

## Description

La présente invention concerne une batterie du type comportant :
- un ensemble de cellules reliées en série, chaque cellule comportant un élément de stockage d'énergie relié en série avec un interrupteur d'isolement commandable et un interrupteur de shunt commandable relié en parallèle avec l'élément de stockage d'énergie et l'interrupteur d'isolement commandable,
- une unité de commande des interrupteurs d'isolement et de shunt de chaque cellule, les interrupteurs commandables d'une même cellule étant dans des états opposés,
- une bobine reliée en série avec l'ensemble de cellules reliées en série entre deux bornes d'alimentation ; et
- un capteur de mesure de l'intensité circulant entre les bornes d'alimentation.

Les batteries sont formées d'un ensemble de cellules comportant chacune au moins un élément de stockage d'énergie électrique. Ces cellules sont reliées en série pour permettre à la batterie de fournir en sortie une tension élevée pouvant atteindre la somme des tensions individuelles des éléments de stockage des cellules.

Chaque élément de stockage d'énergie a une intensité de charge maximale admissible et il convient de veiller à ce que cette intensité ne soit pas dépassée lors des phases de chargement.

Afin d'assurer une charge depuis plusieurs sources d'énergie électrique, telles que le secteur, souvent de 220 ou 110 volts alternatif, un panneau solaire fournissant du courant continu, ou encore une borne de recharge de véhicule électrique fournissant également du courant continu, il est connu de prévoir entre les bornes de charge de la batterie et l'ensemble des cellules de stockage d'énergie, un chargeur propre à injecter un courant électrique inverse de celui fourni lors de la décharge des cellules.

Les chargeurs sont généralement composés d'un circuit de régulation secteur constitué d'un transformateur suivi d'un redresseur à diodes puis d'un lissage à l'aide de condensateur et enfin d'un circuit de régulation.

Ce chargeur est relativement encombrant et occasionne des pertes lors des phases de traitement du courant électrique.

L'invention a pour but de proposer une batterie ayant un encombrement limité et pouvant être chargée depuis différentes sources d'énergie électrique tout en présentant lors de sa recharge des pertes réduites.

A cet effet, l'invention a pour objet une batterie du type précité, caractérisée en ce que l'unité de commande est propre à mesurer la tension issue du capteur et à commander les interrupteurs à une fréquence supérieure à 1 kHz en fonction de l'intensité mesurée ; et
l'unité de commande comporte, des moyens pour, à chaque cycle, ajouter un élément de stockage d'énergie en série dans l'ensemble des éléments de stockage d'énergie connectés en série si l'intensité mesurée est supérieure à une intensité maximale et shunter un élément de stockage d'énergie en série dans l'ensemble des éléments de stockage d'énergie connectés en série si l'intensité mesurée est inférieure à une intensité minimale.

Suivant des modes particuliers de la réalisation, la batterie comporte l'une ou plusieurs des caractéristiques suivantes :
- elle comporte un relais de sectionnement relié pour sa commande à l'unité de commande, propre à interrompre la circulation d'un courant entre les deux bornes et l'unité de commande est propre à :
   - alors que le relais est ouvert, connecter en série des éléments de stockage des cellules en nombre tel que la tension aux bornes des éléments de stockage connectés en série soit comprise entre la tension d'alimentation et la tension d'alimentation réduite d'une tension de charge prédéterminée ;
   - fermer le relais, alors la tension aux bornes des éléments de stockage connectés en série est comprise entre la tension d'alimentation et la tension d'alimentation réduite d'une tension de charge prédéterminée ;
- elle comporte un redresseur dont l'entrée est connectée aux deux bornes d'alimentation au travers de la bobine, l'ensemble de cellules reliées en série étant connecté à la sortie du redresseur ;
- le redresseur comporte un pont de diodes ;
- la batterie est dépourvue de chargeur entre les bornes d'alimentation et l'ensemble de cellules reliées en série ;
- la tension de charge est inférieure ou égale à la tension maximale de charge d'un des éléments de stockage d'énergie ;
- la batterie comporte des moyens de mesure de la tension de chaque élément de stockage d'énergie reliés à l'unité de commande et l'unité de commande est propre à commander les interrupteurs des cellules en fonction de la tension mesurée aux bornes de chaque élément de stockage ;
- l'inductance de la bobine est supérieure à $\frac{{R}_{L}}{fln \left(1-\frac{{R}_{L} {I}_{max}}{{U}_{L}}\right)}$, où R_{L} est la résistance de la bobine, f est la fréquence de mesure et de commande, Iₘₐₓ est l'intensité de charge maximale d'une cellule, U_{L} est la tension de charge maximale d'une cellule et In est le logarithme népérien ; et
- l'inductance de la bobine est comprise entre 1 µH et 1 mH.

L'invention sera mieux comprise à la lecture de la description qui va suivre, donnée uniquement à titre d'exemple et faite en se référant aux dessins sur lesquels :
- la figure 1 est une vue schématique d'une batterie selon l'invention ;
- La figure 2 est un organigramme illustrant le choix de cellules dont les éléments de stockage d'énergie doivent être prioritairement connectés ; et
- la figure 3 est un organigramme illustrant la commande de la batterie lors de son chargement.

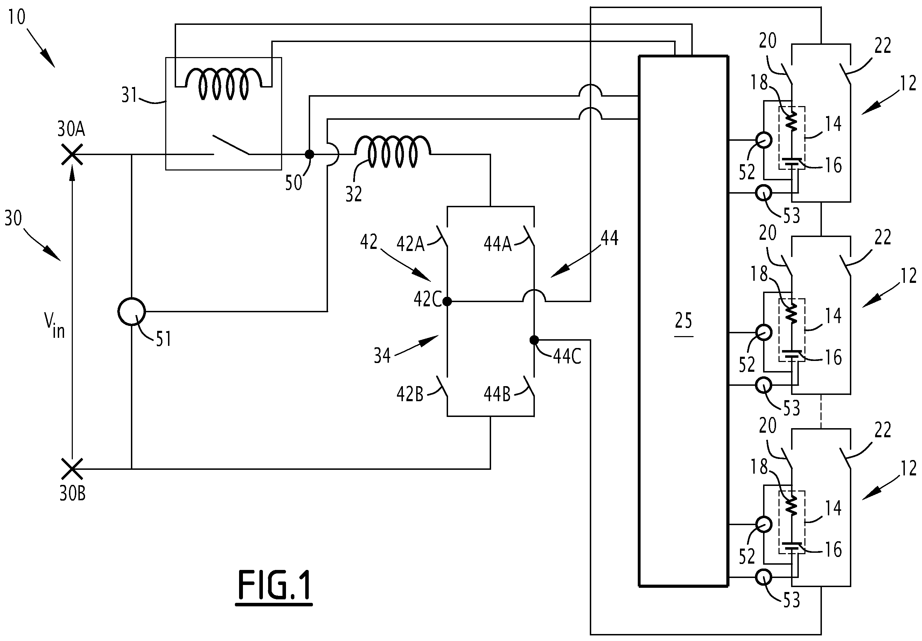

La batterie 10 illustrée sur la figure 1 comporte un ensemble de cellules 12 identiques reliées en série pour le stockage de l'énergie électrique. Sur la figure 1, seules trois cellules sont représentées. En pratique, le nombre de cellules est très supérieur et par exemple égal à 128.

Chaque cellule 12 comporte un élément de stockage d'énergie 14 schématisé par un accumulateur 16 monté en série avec une résistance 18. En pratique, la résistance 18 est la résistance de l'accumulateur 16.

Chaque élément de stockage d'énergie 14 a par exemple une intensité de charge maximale de trois Ampères et est propre à produire à ses bornes une tension de 4,2 Volts maximum lorsqu'il est chargé. La tension à ses bornes varie de 2,8 V à 4,2 V selon son état de charge.

Dans chaque cellule, l'élément de stockage d'énergie 14 est relié en série avec un interrupteur commandable 20 d'isolement de l'élément de stockage d'énergie 14. En outre, la cellule comporte un interrupteur commandable 22 de shunt relié en parallèle de l'ensemble formé de l'élément de stockage 14 et de l'interrupteur d'isolement 20.

Les interrupteurs 20 et 22 de chaque cellule sont commandés indépendamment d'une cellule à l'autre en étant reliés à une unité de commande 25.

Les interrupteurs d'isolement 20 et de shunt 22 de chaque cellule sont réliés et/ou commandés de sorte qu'ils soient systématiquement dans des états opposés, c'est-à-dire que lorsque l'interrupteur de shunt 22 est fermé, l'interrupteur d'isolement 20 est ouvert et réciproquement.

Les cellules 12 sont reliées en série pour former l'ensemble de cellules.

La batterie comporte une entrée 30 de charge de la batterie à laquelle est relié l'ensemble de cellules au travers d'un relais 31, d'une bobine 32 et d'un redresseur 34.

Plus précisément, l'entrée 30 comporte deux bornes 30A, 30B propres à recevoir une tension notée Vᵢₙ. Le relais 31, la bobine 32 et l'entrée du redresseur 34 sont reliés en série entre les bornes 30A et 30B. La bobine 32 a un inductance comprise entre 1 µH et 1 mH.

Le relais 31 est relié à l'unité de commande 25 pour son pilotage entre son état ouvert et fermé.

Comme connu en soi, le redresseur comporte deux branches 42, 44 montées en parallèle sur ses entrées. Chaque branche comporte deux interrupteurs commandés 42A, 42B, 44A, 44B. L'ensemble de cellules est connecté aux points milieu 42C, 44C de chaque branche, formés des points de connexion entre les deux interrupteurs commandés d'une même branche. Ces points milieu forment les sorties du redresseur.

Les quatre interrupteurs du redresseur 34 sont reliés pour leur commande à l'unité de commande 25 suivant une loi de commande connue en soi.

En variante, le redresseur 24 est formé par un pont de diodes, dont la structure correspond à celle précédemment décrite en remplaçant les interrupteurs commandés par des diodes.

En outre, un capteur de courant 50 est disposé entre le relais 31 et la bobine 32 pour mesurer l'intensité de charge I_{Ch}. Un capteur de tension 51 est prévu entre les bornes 30A, 30B pour mesurer la tension d'entrée Vᵢₙ. Ces capteurs sont reliés à l'unité de commande 25.

Chaque cellule 12 comporte en outre un capteur 52 de mesure de la tension aux bornes de l'élément 14 de stockage d'énergie de la cellule ainsi qu'un capteur 53 de mesure la température de la cellule. Ces capteurs sont reliés à l'unité de commande 25.

Pour la recharge de la batterie, les entrées 30A et 30B sont connectées à une alimentation électrique telle que le réseau d'alimentation collectif sous 110 volts ou 230 volts alternatifs, un panneau solaire ou encore une autre batterie.

L'algorithme mis en oeuvre par l'unité de commande 25 assure en permanence un tri des cellules 12 pour classer par ordre de préférence les cellules dont les éléments de stockage d'énergie doivent être connectés ou déconnectés de l'ensemble des éléments de stockage connectés en fonction du courant d'entrée I_{ch} induit par la tension Vᵢₙ en entrée.

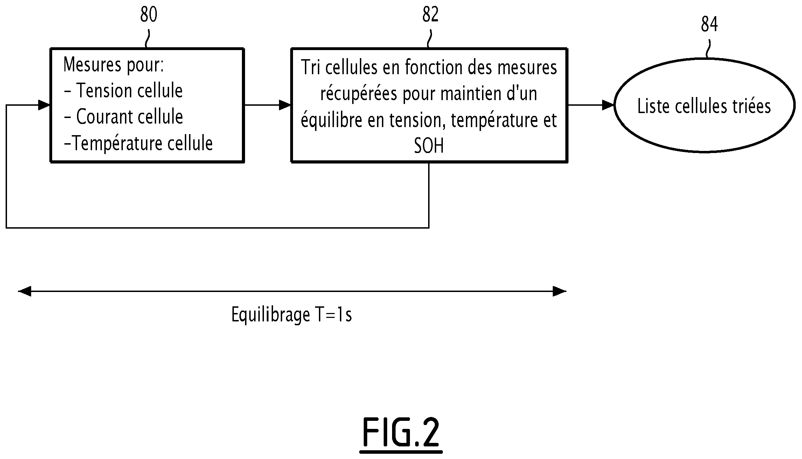

A cet effet, et comme illustré sur la figure 2, des mesures de tension et de température sont effectuées sur chaque cellule et un tri est effectué de celles-ci de manière cyclique. L'unité de commande assure cette mesure et ce tri à une fréquence réduite par exemple de 1Hz. À l'étape 80, une mesure de la tension aux bornes de chaque cellule est effectuée depuis les capteurs 52 ainsi qu'une mesure de la température de chaque cellule depuis les capteurs 53. De même, une mesure du courant I_{ch} appliqué aux cellules est effectuée depuis le capteur 50.

À l'étape 82, les cellules sont triées en fonction des mesures effectuées pour maintenir un équilibre en tension, en température et en état de santé (couramment désigné par SOH acronyme de State of Health en anglais).

À partir du tri effectué à l'étape 82, une liste des cellules triées notées 84 est remise à jour à chaque cycle, par exemple chaque seconde lorsque la fréquence de traitement est de 1 Hz.

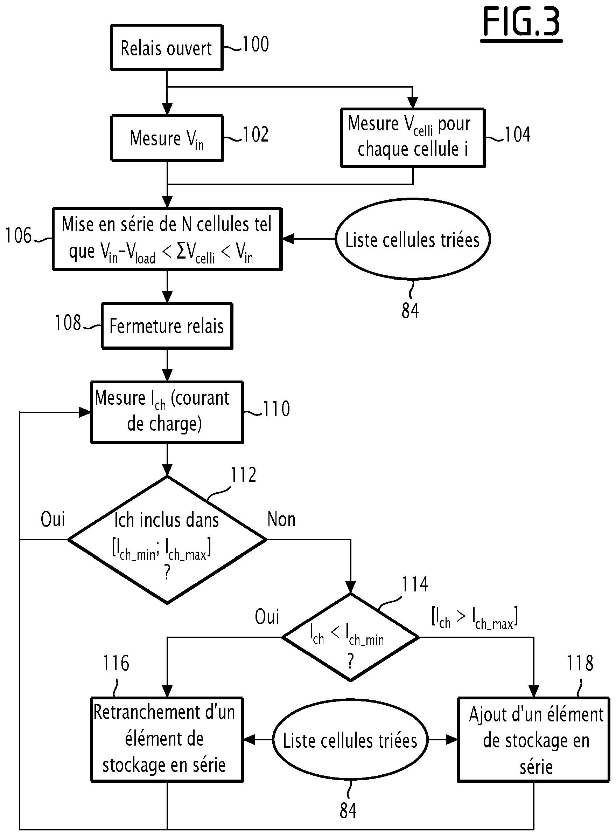

Pour la recharge de la batterie, et simultanément à la mise en oeuvre de l'algorithme de la figure 2, l'algorithme de la figure 3 est mis en oeuvre par l'unité de commande 25 pour assurer la recharge des cellules.

Initialement, le relais 31 est ouvert à l'étape 100 avant que la charge ne commence.

A l'étape 102, l'unité de commande 25 effectue une mesure de la tension Vᵢₙ à l'entrée 30 grâce au capteur 51. De même, elle effectue à l'étape 104 une mesure de la tension U_{celli} de chaque cellule 12, l'indice i étant représentatif de la cellule considérée.

A l'étape 106, l'unité de commande 25 sélectionne, à partir de la tension Vᵢₙ et d'une tension de charge V_{load} prédéterminée, les éléments de stockage des cellules à connecter en série. Les cellules sélectionnées sont telles que la somme des tensions aux bornes de ces cellules est comprise entre la tension Vᵢₙ mesurée diminuée d'une tension de charge V_{load} prédéfinie et la tension Vᵢₙ.

Les cellules sélectionnées satisfont ainsi la relation Vᵢₙ - V_{load} < Σ U_{celli} < Vᵢₙ, où ΣU_{celli} représente la somme des tensions aux bornes des seules cellules sélectionnées pour que les éléments de stockage être soient connectés en série.

Avantageusement, la tension V_{load} est choisie c'est-à-dire 4,2V dans l'exemple considéré de l'ensemble des éléments de stockage d'énergie 14.

Les cellules sélectionnées sont choisies prioritairement dans l'ordre de la table 84 donnant la liste des cellules triées. Suivant un mode particulier de réalisation, elles sont choisies dans l'ordre inverse de l'état de charge des cellules, c'est-à-dire dans l'ordre inverse de la tension mesurée à leurs bornes.

A l'étape 108, les interrupteurs d'isolement 20 des cellules sélectionnées sont fermés alors que les interrupteurs de shunt 22 des cellules sélectionnées sont ouverts. A l'inverse, pour les cellules non sélectionnées, les états des interrupteurs commandés sont opposés, les interrupteurs d'isolement 20 étant ouverts et les interrupteurs de shunt 22 étant fermés. Ainsi, seuls les éléments de stockage des cellules sélectionnées sont connectés en série.

Le relais 31 est alors fermé à l'étape 108.

L'unité de commande 25 est propre à assurer des mesures et une commande cyclique de la connexion et déconnexion de cellule à une fréquence supérieure à 1 kiloHertz et de préférence sensiblement égale à 20 kiloHertz.

Pour chaque cycle, l'unité de commande 25 met en oeuvre les étapes suivantes de l'organigramme illustré sur la figure 3.

À l'étape 110, le courant de charge I_{ch} est mesuré par le capteur d'intensité 31.

À l'étape 112, le courant mesuré est comparé à une plage de courant de charge admissible définie [I_{ch_min} ; I_{ch_max}] où I_{ch_min} est une valeur de charge minimale et I_{ch_max} est une valeur de charge maximale. Si chaque cellule accepte un courant de charge maximal par construction de trois ampères, le courant de charge maximal I_{ch_max} est pris égal à 2,4 ampères et le courant de charge minimal I_{ch_min} est pris égal à 1,5 ampère.

Si le courant de charge mesuré à l'étape 112 est compris dans la plage de courant de charge, l'étape 110 est à nouveau mise en oeuvre.

En revanche, si le courant est en dehors de la plage acceptable, le courant de charge 114 est comparé au courant de charge minimum I_{ch_min}.

Si le courant de charge I_{ch} est inférieur, un élément de stockage d'une cellule est retiré des éléments de stockage connectés en série. À cet effet, l'élément de stockage est shunté par commande de l'interrupteur de shunt de la cellule et l'interrupteur d'isolement de la cellule est ouvert.

La cellule dont l'état de stockage est retranché est choisie prioritairement suivant l'ordre de la liste contenue dans la table 84.

En revanche, si à l'étape 114, le courant de charge I_{ch} est supérieur au courant de charge maximal I_{ch_max}, l'élément de stockage d'une cellule est ajouté à l'étape 118 dans l'ensemble des éléments de stockage connectés en série.

La cellule dont l'élément de stockage est ajouté en série est choisie dans la liste des cellules triées de la table 84.

Pour ajouter l'élément de stockage, l'interrupteur de shunt de la cellule retenue est ouvert alors que l'interrupteur d'isolement de la cellule est fermé.

La boucle démarrée à l'étape 110 est mise en oeuvre à une fréquence élevée par exemple égale à 20 kilohertz.

On comprend ainsi que quelle que soit la tension d'alimentation, le courant de charge des cellules est maintenu compris dans la plage de courant admissible, même si la tension d'alimentation est sinusoïdale ou de toute autre forme.

La fréquence de régulation pour les étapes 110 et suivantes étant élevée, et la bobine 32 réduisant la vitesse de variation de l'intensité, au cours d'un cycle de régulation, l'intensité ne peut augmenter trop rapidement et dépasser l'intensité acceptable pour les cellules constituant la batterie au cours d'un cycle.

Les étapes 110 et suivantes sont à nouveau mises en oeuvre lors du cycle suivant.

On comprend qu'initialement lors du premier cycle de charge, la tension appliquée à l'ensemble des cellules sélectionnées dont les éléments de stockage sont reliés en série lors de la charge est comprise entre 0 et V_{load}, V_{load} étant égale à la tension de charge maximale d'une cellule. Par mise en oeuvre de l'algorithme, la tension appliquée à l'ensemble des cellules est inférieure à la tension de la cellule la plus chargée.

En outre, chaque cellule ayant une résistance propre 18 d'une valeur R, l'intensité maximale du courant circulant dans les cellules est égale à $\frac{{V}_{in} - {Σ}_{{U}_{celli}}}{Σ R}$ et ce courant est inférieur à $\frac{{V}_{load}}{Σ R}$ où la ∑*U_{celli}* et ∑*U* sont respectivement la somme des tensions et la somme des résistances des cellules sélectionnées effectivement connectées en série.

Par construction d'une cellule et comme *V_{load}* est égale à la tension maximale aux bornes d'une cellule, $\frac{{V}_{load}}{R}$ est inférieur à l'intensité du courant de charge maximale, considéré ici égal à 3A et par conséquent $\frac{{V}_{load}}{Σ R}$ l'est aussi.

En outre, la bobine 32 assure un retard du courant transmis à l'ensemble des cellules, permettant à la fréquence de l'unité de commande 25, d'assurer une connexion d'un nombre de cellules suffisant pour éviter que le courant circulant dans l'ensemble des cellules ne soit supérieur à l'intensité maximale prise ici égale à 3 Ampères pendant toute la durée du cycle.

A cet effet, la bobine 32 est dimensionnée de sorte à ce que sur une période d'un cycle, l'intensité circulant dans l'ensemble des cellules ne puisse dépasser 3 Ampères.

A cet effet, avantageusement la bobine 32 a une inductance supérieure à $\frac{{R}_{L}}{fln \left(1-\frac{{R}_{L} {I}_{max}}{{U}_{L}}\right)}$, où R_{L} est la résistance de la bobine 32, f est la fréquence de mesure et de commande, Iₘₐₓ est l'intensité de charge maximale d'une cellule, U_{L} est la tension de charge maximale d'une cellule et In est le logarithme népérien.

## Revendications

1. Batterie comportant :
- un ensemble de cellules (12) reliées en série, chaque cellule (12) comportant un élément de stockage d'énergie (14) relié en série avec un interrupteur d'isolement commandable (20) et un interrupteur de shunt commandable (22) relié en parallèle avec l'élément de stockage d'énergie (14) et l'interrupteur d'isolement commandable (20),
- une unité (25) de commande des interrupteurs d'isolement (20) et de shunt (22) de chaque cellule, les interrupteurs commandables (20, 22) d'une même cellule étant dans des états opposés,
- une bobine (32) reliée en série avec l'ensemble de cellules (12) reliées en série entre deux bornes d'alimentation (30A, 30B),
- un redresseur (34) dont l'entrée est connectée aux deux bornes d'alimentation (30A, 30B) au travers de la bobine (32), l'ensemble de cellules (12) reliées en série étant connecté à la sortie du redresseur (34), et
- un capteur (51) de mesure de l'intensité (I_{ch}) du courant de charge circulant entre les bornes d'alimentation (30A, 30B),
**caractérisée en ce que** l'unité de commande (25) est propre à mesurer la tension issue du capteur (51) et à commander les interrupteurs (20, 22) à une fréquence supérieure à 1 kHz en fonction de l'intensité mesurée, et
l'unité de commande (25) comporte, des moyens pour, à chaque cycle, ajouter un élément de stockage d'énergie (14) en série dans l'ensemble des éléments de stockage d'énergie (14) connectés en série si l'intensité mesurée (I_{ch}) est supérieure à une intensité maximale (I_{ch_max}) et shunter un élément de stockage d'énergie (14) en série dans l'ensemble des éléments de stockage d'énergie (14) connectés en série si l'intensité mesurée est inférieure à une intensité minimale (I_{ch_min}).

2. Batterie selon la revendication 1, **caractérisée en ce qu'**elle comporte un relais (31) de sectionnement relié pour sa commande à l'unité de commande (25), propre à interrompre la circulation d'un courant entre les deux bornes (30A, 30B) et **en ce que** l'unité (25) de commande est propre à :
- alors que le relais (31) est ouvert, connecter en série des éléments de stockage (14) des cellules en nombre tel que la tension aux bornes des éléments de stockage (14) connectés en série soit comprise entre la tension d'alimentation (Vᵢₙ) et la tension d'alimentation (Vᵢₙ) réduite d'une tension de charge (V_{load}) prédéterminée ;
- fermer le relais (31), alors la tension aux bornes des éléments de stockage (14) connectés en série est comprise entre la tension d'alimentation (Vᵢₙ) et la tension d'alimentation (Vᵢₙ) réduite d'une tension de charge (V_{load}) prédéterminée.

3. Batterie selon la revendication 1 ou 2, **caractérisée en ce que** le redresseur (34) comporte un pont de diodes.

4. Batterie selon l'une quelconque des revendications précédentes, **caractérisée en ce qu'**elle est dépourvue de chargeur entre les bornes d'alimentation (30A, 30B) et l'ensemble de cellules (12) reliées en série.

5. Batterie selon l'une quelconque des revendications précédentes, **caractérisée en ce que** la tension de charge (V_{load}) est inférieure ou égale à la tension maximale de charge d'un des éléments de stockage d'énergie (14).

6. Batterie selon l'une quelconque des revendications précédentes, **caractérisée en ce qu'**elle comporte des moyens (52) de mesure de la tension de chaque élément de stockage d'énergie (14) reliés à l'unité de commande (25) et l'unité de commande (25) est propre à commander les interrupteurs (20, 22) des cellules en fonction de la tension mesurée aux bornes de chaque élément de stockage (14).

7. Batterie selon l'une quelconque des revendications précédentes, **caractérisée en ce que** l'inductance de la bobine (32) est supérieure à $\frac{{R}_{L}}{fln \left(1-\frac{{R}_{L} {I}_{max}}{{U}_{L}}\right)}$, où R_{L} est la résistance de la bobine (32), f est la fréquence de mesure et de commande, Iₘₐₓ est l'intensité de charge maximale d'une cellule, U_{L} est la tension de charge maximale d'une cellule et In est le logarithme népérien.

8. Batterie selon l'une quelconque des revendications précédentes, **caractérisée en ce que** l'inductance de la bobine (32) est comprise entre 1 µH et 1 mH.

## Patentansprüche

1. Batterie, umfassend:
- eine Anordnung von in Reihe geschalteten Zellen (12), wobei jede Zelle (12) ein Energiespeicherelement (14) umfasst, welches in Reihe mit einem steuerbaren Trennschalter (20) geschaltet ist, und einen steuerbaren Shunt-Schalter (22) umfasst, welcher parallel mit dem Energiespeicherelement (14) und dem steuerbaren Trennschalter (20) geschaltet ist,
- eine Steuereinheit (25) für den Trennschalters (20) und für den Shunt-Schalters (22) von jeder Zelle, wobei die steuerbaren Schalter (20, 22) einer gleichen Zelle in entgegengesetzten Zuständen sind,
- eine Spule (32), in Reihe geschaltet mit der Anordnung der Zellen (12), welche in Reihe zwischen zwei Versorgungsanschlüssen (30A, 30B) geschaltet sind,
- einen Gleichrichter (34), dessen der Eingang über die Spule (32) mit den zwei Versorgungsanschlüssen (30A, 30B) verbunden ist, wobei die Anordnung der in Reihe geschalteten Zellen (12) mit dem Ausgang des Gleichrichters (34) verbunden ist, und
- einen Sensor (51) zur Messung der Stromstärke (I_{ch}) des Laststroms, welcher zwischen den Versorgungsanschlüssen (30A, 30B) zirkuliert,
**dadurch gekennzeichnet, dass** die Steuereinheit (25) dazu geeignet ist, die Spannung zu messen, welche vom Sensor (51) ausgegeben wird, und die Schalter (20, 22) mit einer Frequenz größer als 1 kHz in Abhängigkeit von der gemessenen Stromstärke zu steuern, und
die Steuereinheit (25) Mittel umfasst, um bei jedem Zyklus ein Energiespeicherelement (14) in Reihe in die Anordnung der Energiespeicherelemente (14) hinzuzufügen, welche in Reihe geschaltet sind, wenn die gemessene Stromstärke (I_{ch}) größer als eine maximale Stromstärke (I_{ch_max}) ist, und um ein Energiespeicherelement (14) in Reihe in der Anordnung der Energiespeicherelemente (14), welche in Reihe geschaltet sind, zu shunten, wenn die gemessene Stromstärke kleiner als eine minimale Stromstärke (I_{ch_min}) ist.

2. Batterie nach Anspruch 1, **dadurch gekennzeichnet, dass** sie ein Trennrelais (31) umfasst, welches für seine Steuerung mit der Steuereinheit (25) verbunden ist, geeignet, um die Zirkulation eines Stroms zwischen den zwei Anschlüssen (30A, 30B) zu unterbrechen, und dass die Steuereinheit (25) dazu geeignet ist:
- dann, wenn das Relais (31) geöffnet ist, Energiespeicherelemente (14) der Zellen in einer solchen Anzahl in Reihe zu schalten, dass die Spannung an den Anschlüssen der Energiespeicherelemente (14), welche in Reihe geschaltet sind, zwischen der Versorgungsspannung (Vᵢₙ) und der Versorgungsspannung (Vᵢₙ) reduziert um eine vorbestimmte Lastspannung (V_{load}) liegt;
- das Relais (31) zu schließen, wobei dann die Spannung an den Anschlüssen der Energiespeicherelemente (14), welche in Reihe gechaltet sind, zwischen der Versorgungsspannung (Vᵢₙ) und der Versorgungsspannung (Vᵢₙ) reduziert um eine vorbestimmte Lastspannung (V_{load}) liegt.

3. Batterie nach Anspruch 1 oder 2, **dadurch gekennzeichnet, dass** der Gleichrichter (34) eine Diodenbrücke umfasst.

4. Batterie nach einem der vorhergehenden Ansprüche, **dadurch**
**gekennzeichnet, dass** sie ohne Ladegerät zwischen den Versorgungsanschlüssen (30A, 30B) und der Anordnung der in Reihe geschalteten Zellen (12) ist.

5. Batterie nach einem der vorhergehenden Ansprüche, **dadurch**
**gekennzeichnet, dass** die Lastspannung (V_{load}) kleiner oder gleich der maximalen Lastspannung eines der Energiespeicherelemente (14) ist.

6. Batterie nach einem der vorhergehenden Ansprüche, **dadurch**
**gekennzeichnet, dass** sie Mittel (52) zur Messung der Spannung jedes Energiespeicherelements (14) umfasst, welche mit der Steuereinheit (25) verbunden sind, und, dass die Steuereinheit (25) geeignet ist, die Schalter (20, 22) der Zellen in Abhängigkeit von der Spannung zu steuern, welche an den Anschlüssen jedes Energiespeicherelements (14) gemessenen wird.

7. Batterie nach einem der vorhergehenden Ansprüche, **dadurch**
**gekennzeichnet, dass** die Induktivität der Spule (32) größer ist als $\frac{{R}_{L}}{fln \left(1-\frac{{R}_{L} {I}_{max}}{{U}_{L}}\right)}$, wobei R_{L} der Widerstand der Spule (32) ist, f die Mess- und Steuerfrequenz ist, Iₘₐₓ die maximale Laststromstärke einer Zelle ist, U_{L} die maximale Lastspannung einer Zelle ist und In der natürliche Logarithmus ist.

8. Batterie nach einem der vorhergehenden Ansprüche, **dadurch**
**gekennzeichnet, dass** die Induktivität der Spule (32) zwischen 1 µH und 1 mH liegt.

## Claims

1. A battery comprising:
- a set of cells (12) connected in series, each cell (12) comprising an energy storage element (14) connected in series with a controllable isolation switch (20) and a controllable shunt switch (22) connected in parallel with the energy storage element (14) and the controllable isolation switch (20),
- a unit (25) for controlling the isolation (20) and shunt (22) switches of each cell, the controllable switches (20, 22) of the same cell being in opposite states,
- a coil (32) connected in series with the set of cells (12) connected in series between two power supply terminals (30A, 30B),
- a rectifier (34) whose input is connected to the two power supply terminals (30A, 30B) through the coil (32), the set of cells (12) connected in series being connected to the output of the rectifier (34), and
- a sensor (51) for measuring intensity (I_{ch}) of the load current flowing across the power supply terminals (30A, 30B),
**characterised in that** the control unit (25) is capable of measuring the voltage from the sensor (51) and controlling the switches (20, 22) at a frequency greater than 1 kHz according to the intensity measured, and
the control unit (25) comprises means for, at each cycle, adding an energy storage element (14) in series to the set of energy storage elements (14) connected in series if the intensity (I_{ch}) measured is greater than a maximum intensity (I_{ch_max}), and shunting an energy storage element (14) in series in the set of energy storage elements (14) connected in series if the intensity measured is less than a minimum intensity (I_{ch_min}).

2. The battery according to claim 1, **characterised in that** it comprises a sectioning relay (31) connected for being controlled by the control unit (25), capable of interrupting flow of a current between the two terminals (30A, 30B) and **in that** the control unit (25) is capable of:
- while the relay (31) is open, connecting in series storage elements (14) of the cells in such a number that the voltage across the terminals of the storage elements (14) connected in series is between the power supply voltage (Vᵢₙ) and the power supply voltage (Vᵢₙ) reduced by a predetermined load voltage (V_{load});
- closing the relay (31), then the voltage across the terminals of the storage elements (14) connected in series is between the power supply voltage (Vᵢₙ) and the power supply voltage (Vᵢₙ) reduced by a predetermined load voltage (V_{load}).

3. The battery according to claim 1 or 2, **characterised in that** the rectifier (34) comprises a diode bridge.

4. The battery according to any one of the preceding claims, **characterised in that** it is without a charger between the power supply terminals (30A, 30B) and the set of cells (12) connected in series.

5. The battery according to any one of the preceding claims, **characterised in that** the load voltage (V_{load}) is less than or equal to the maximum load voltage of one of the energy storage elements (14).

6. The battery according to any one of the preceding claims, **characterised in that** it comprises means (52) for measuring voltage of each energy storage element (14) connected to the control unit (25) and the control unit (25) is capable of controlling the switches (20, 22) of the cells according to the voltage measured across the terminals of each storage element (14).

7. The battery according to any one of the preceding claims, **characterised in that** the inductance of the coil (32) is greater than $\frac{{R}_{L}}{fln \left(1-\frac{{R}_{L} {I}_{max}}{{U}_{L}}\right)}$, where R_{L} is the resistance of the coil (32), f is the measurement and control frequency, Iₘₐₓ is the maximum load intensity of a cell, U_{L} is the maximum load voltage of a cell, and In is the natural logarithm.

8. The battery according to any one of the preceding claims, **characterised in that** the inductance of the coil (32) is between 1 µH and 1 mH.
